# EUROPEAN PATENT SPECIFICATION

(11) **EP 2 999 328 B1**
(45) Date of publication and mention of the grant of the patent: **30.08.2017**
(21) Application number: 14739660.0
(22) Date of filing: 20.05.2014
(51) Int. Cl.: A01K 47/06, A01K 47/00

(54) **BEEHIVE**
BIENENSTOCK
RUCHE

(30) Priority: 22.05.2013 BG 11147813
(43) Date of publication of application: 30.03.2016
(73) Proprietor: TODOROV, Todor Dobrev, 9700 Shumen (BG)
(72) Inventor: TODOROV, Todor Dobrev, 9700 Shumen (BG)
(74) Representative: Benatov, Samuil Gabriel
(86) International application number: PCT/BG2014/000021
(87) International publication number: WO 2014/186848

(56) References cited:
- EP-A1- 0 062 955
- US-A- 35 426
- US-A- 470 789
- US-A- 4 133 065
- US-A- 4 367 563

## Description

### FIELD OF THE INVENTION

The invention relates to a beehive and is applicable in the apiculture.

### BACKGROUND OF THE INVENTION

In the modem beehives the bee colony lives and develops on honeycombs that are fixed on frames, which make the honeycombs mobile.

The honeycomb frames can be located on one or more levels.

The hives with frames located on more levels can be of two kinds - in one common body or in some different bodies. Through the different bodies the internal volume of the beehive could be adjusted and differentiated, having separate honey and brood spaces. Different techniques of redirecting the bees between the top box and the adjacent to it lower one, could be implemented. The frames set free from bees could be carried out or in, together with the box.

But since in those beehives every box supports the upper one, all the operations - feeding, inspection, redirection of bees and extraction of honey, can be performed independently from the other boxes only for the upper one. Although the queen bee can be isolated in the lower box, she could be found only by removing the upper one and by random search through all the internal space of the hive.

In the known beehives, in which the frames located on more levels are situated in a common body, it is not possible to create functionally differentiated interior spaces, or to perform a redirection of bees, or to carry out the frames arranged in groups. The queen bee could be on every frame at every level therein. A beehive is known from document US-A-4133065. In both kinds of beehives, it is not possible to collect the pollen independently on the different levels. It can be done by pollen traps consisting of two parts - the first one that removes the pollen pellets and the second one that collects them. Both are placed together by the bottom entry and, even when there are entries on each level, pollen is being collected at the bottom-level entrance only. That's the reason why the bees mix up the pollen in the honey of the combs in the upper levels.

The obtaining of artificial bee swarms happens by shaking down the honeycombs with bees through a funnel in a special container.

The extraction of bee venom is made by devices which are mounted at the entry of the beehives. The smell of extracted venom at the entrance irritates not only the whole bee colony but all the surrounding colonies.

In both hive types it is impossible to breed several independent colonies in the different hive levels, that could be served independently and, after removal of the queen bees, to be united.

The interior space of every of the known beehives is being linked with the outdoor space by one or more entrances. Their size can be regulated by an entrance regulator. An entrance regulator is known, which is a rectangular prism with grooves on some of its walls. The regulator is placed in a receptacle which is a horizontal opening above the bottom board in the hive's wall and corresponds to the configuration and the size of the entrance regulator. After the entrance regulator is being placed in the receptacle, with the desired regulator wall's groove downwards, this groove forms a horizontal passage, which plays the role of the hive's entrance.

### TECHNICAL CHARACTER OF THE INVENTION

The purpose of this invention is the creation of a beehive with frames situated at several levels in common body, in which body the inner space can be divided into independently functioning and accessible inner spaces at each level, with frames grouped in cases. These separate case spaces should allow independent service, inspection, feeding, honey and pollen independent storing and the bees, including the queen bee should be directed and redirected to and between each one of them independently.

The assignment for the creation of independent functionally distinct spaces at each single level is achieved by the combination of internal horizontal partially separating partitions, vertical partitions and laterally, independently attached additionally separating redirecting partitions, according to the features of claim 1. The horizontal partially separating partitions, combined with the additionally separating redirecting partitions, separate the common inner space between each one of the levels.

The vertical partitions are parallel or transverse to the grouped frames. The vertical transverse partitions are fixed and are part of the framework of the hive. At each level their height is add to the height of the frames by the bearers of case frames. Together they divide the inner space into transverse to each other independent inner spaces: the one inner space - with main function is a case space, in which are arranged in cases two groups with parallel frames and the others are two transverse servicing spaces, with their lengths transverse to the frames in the cases. One of these transverse spaces is transverse redirecting frame space. At each level in it is a single frame which is situated transverse to the frames, grouped in the case. This space is used for redirection of the bees by the redirecting system in it. The system for pollen storing, which system is connected to the redirecting system is also in this space.

The other transverse space is the transverse watering space. In this space, at each one of the levels, are placed one above each other two racks with spillways, each one of them might be part of two parallel and independent in function watering systems connecting all the levels and feeding the bees in each differentiated inner space, independently from those in other differentiated inner spaces.

The horizontal partially separating partitions are fixed in between case spaces and they have two open spaces at the two end parts, the surfaces of which open spaces are equal to the surface of the transverse frame space. The surface of the additionally separating redirecting partitions is equal to the surface of the transverse frame space and is also equal to the surface of the open parts between the case spaces. They could be placed through the receptacle for the entrance regulator directly sideways from the outside and would be situated between the entrance regulator from one of the three sides, which have receptacles at each level, and the correspondent horizontal partially closing partition. By placing in conjunction the horizontal partially separating partition and the three additionally separating redirecting partitions sideways on the three sides, the inner space of the hive would be entirely horizontally separated. If only one of them is absent, its place becomes the only free passage between these partially separated inner spaces. Complete separation is only one of the two functions of the additionally separating redirecting partitions.

The additionally separating redirecting partitions might be perforated with selective openings which let only the worker bees go through, but not the queen bee. By using them, a certain part of the whole inner space is separated only for the queen bee.

Above and below the horizontal partially separating partitions from the side of the transverse redirecting frame space there are free passages, through which the transverse redirecting frame space is connected with the two parts of the case space at the same level. The size of these passages is selective - through it can pass only worker bees, but not queens. The case spaces are connected with the other transverse watering space only through openings in the vertical partitions that connect them separately with the racks.

The horizontal partially separating partitions could be meshed, so that superimposed colonies could get accustomed to each other and to allow common vertical ventilation of the common inner space.

Solution of the problem to independent access to any of the functionally distinct spaces -the case space and both serving it transverse spaces, is achieved through a combination of mobile outer walls, separate for each level - for the three of the sides. The transverse watering space is closed sideward by a common movable wall of the transverse watering space. The vertically divided functionally distinct spaces on the top level, covered with individual internal covers, are closed by a sideward sliding outer cover selectively opening just the wanted part of them.

Each of the movable side walls on three sides of the body of the hive is composite and has a moving part that can be sideward withdrawn, and behind it stands a vertical mesh partition through which, after the withdrawal of the movable part, the inner space can be observed. The fixed walls surrounding the top level of the three sides of the hive have the same combinations of a movable part and a vertical mesh partition behind it, except the wall of the watering space.

Between the single walls of each level of the three sides of the hive body there are distances, forming receptacles for the respective entrance regulators. Each receptacle is formed as each wall is oblique from the side of its vertically neighbouring wall of an angle of 45 degrees, in narrowing the receptacle inwards. Thus, each of the two walls of the inserted in the receptacle entrance regulator concluded the angle also 45 degrees with the horizontal plane in both inner edge and stood against it outer edge of the entrance regulator.

The receptacle, the transverse redirecting frame space, an entrance regulator placed in the receptacle and combined with an additionally separating redirecting partition in different combinations of their mutual positions are permanent elements of a system of independent redirecting of the bees between the separate case spaces with frames grouped in them. To the system can be also added a cage for artificial swarms, which can be placed in the case space in place of the cases with frames for collection of the redirected bees.

The system for independent redirection of the flying bees between all functionally independent inner spaces can selectively binds each of these spaces with landing places around the receptacle to which the bees are accustomed.

The entrance regulator is a regular tetragon prism with grooves on two identical adjacent, mutually perpendicular walls which grooves are symmetrically located with respect to the center of each of the walls. It fits snugly into the receptacle at a definite angle of its walls to the horizontal plane, passing simultaneously through its inner edge and the edge standing against it. The angle is definite by and is equal to the angle (45 degrees) of the bevel on the adjacent vertical walls which form the respective receptacle of the entrance regulator. When the inner edge of the entrance regulator in the receptacle is the one that is common to the two sides with grooves, this grooves form passages which connect the outside space with the transverse redirecting frame space and these passages conclude with the horizontal plane against the both edges, in which stands the respective horizontal partially separating partitions, an edge of 45 degrees.

When by using the entrance regulator in the receptacle, the inner edge is mutual for the two sides without grooves, passages connecting the inner and outer space are not being formed and so the entrance through the receptacle is closed.

When the entrance regulator is in such a position that the inner edge is the edge formed by a wall with grooves and a wall without grooves, the only passages formed are those from the grooves of the only wall with grooves. They, only, shall connect the inner with outer space. The bees will fly in and out through them, and will acquire a reflex for distinguishing these passages and the site for landing and flying.

If the only wall with grooves is placed in the receptacle in a way that from inside out forms an angle of 45 degrees downwards, the site for landing and flying of shall be the place of the hive wall which is below the receptacle. It is more convenient for landing, compared to the wall above, because the loaded bees land bellow the entrance. That is why, during the process of getting them into the habit, the way from the inside to the outside should preferably be downwards.

If, after the bees have gotten the habit of using the so formed passage, the entrance regulator is placed in a new position that the grooves, regardless of their number, which are situated on its wall and form passages in the only direction the bees are used to, change their place and at the same time the inner edge come to be the edge that is common to the two sides with grooves, then the grooves from the first side, being symmetrical to the center of the regulator of the entryway, shall form passages, placed at the same places as the ones to which the bees are used to and so the bees shall continue to land beneath them and enter through them. At the same time, the grooves on the second wall shall form new passages which will connect the inner space with the outer space. From the inside they will be at the same level as the passages formed on the first wall to which the bees are accustomed. If the access of the bees going from the inner space outside through the familiar passages is closed, they will go out without any trouble through the passages, formed by the second wall with grooves, which begin on the same level inside, forming an angle of 90 degrees to the previous in an upwards direction. The place for flying of then shall be the outer wall of the hive, which is situated above the receptacle and the regulator of the entryway.

If, when the entrance regulator changes its position and simultaneously the way in both directions of the bees going in and out is being divided by a partition in such a way, that the passages of the bees coming in are closed to a certain part of the inner space (in this case the upper one) and the bees, going out of this part of the inner space are forced to go out through the new passages, formed by the second wall with grooves and from a new place, which is the place at the upper side wall, after the first only flight they shall not come in through the new flying site, because they are still not used to it, but shall land at the old familiar landing place on the lower movable wall and shall pass through the familiar lower passages in the space bellow the partition. Then, after all the bees have flown out through the new passages, the inner separated space of the hive, occupied by them, will be entirely free. Complete separation of the passages of the bees coming in and the bees going out to and from two partially separated by inner vertical and horizontal partially separating partitions inner spaces of the beehive, shall be accomplished by the additionally separating redirecting partition. It has two functions: the first one is to additionally separate the inner space, which until that time has been partially separated. The second function is to redirect by closing consecutively from two different sides, respectively in two different directions, the passages formed by the grooves of the two walls with grooves of the entrance regulator, after it has been placed in such a position that their common edge is internal. The position of the grooves upon two adjacent walls changes consecutively - each groove on one wall follows a groove upon the other one that is why the passages also are closed consecutively.

The additionally separating redirecting partition accomplishes its first function, with its inner part. This inner part might be flat, with rugosity or with rugosity only on the half of its length. On this part depends how the partially separated by the internal partitions inner space will be additionally separated after this inner part would adjoins the respective inner partition.

Its second function - redirecting, it accomplishes through its outer part - from the side of the entrance regulator. This outer part consists of consecutively divergent external branches in two different directions at an angle of 90 degrees and forming an angle of 45 degrees with the horizontal plane passing between them. Each of these branches corresponds to one of the consecutive grooves of the two adjacent walls with grooves at the entrance regulator. These braches are simultaneously placed between the receptacle walls and the grooves of the regulator.

Each passage, formed by such a groove, might be closed either from one or the other side because each groove from the two walls with grooves crosses the other wall with grooves in the protruding in transverse frame space part of the entrance regulator and the parts of the walls (that form this protruding part) are symmetrical because of the angle of 45 degrees that each one of them forms with the horizontal plane between them. That is why the first branch closes the first groove on the first wall of the regulator of the entryway from the side of the second wall, the second branch which is symmetrically situated to the first one, shall close the next groove which is on the second wall, but from the side of the first wall. After that, the rest of the uneven in their consequence grooves respectively shall be closed, like this one with the first branch and the even ones - like the second.

Thus, for example, when the inner space is completely divided to upper and lower inner spaces by the internal flat horizontal part of the additionally separating redirecting partition, placed near the horizontal partially separating partition, the bees coming in from outside through the passages from below to above shall come upon the uneven branches of the separating in addition redirecting partition which close these passages from above and shall be directed to the lower inner space. After leaving the honey in this space, they shall go out through the same passages through which they entered.

The bees, which at the moment of the additionally separation, have been in the upper space of the beehive, in their attempt to go out through the known leading downwards passages, shall come upon the same uneven branches that close these known passages from above, but with no difficulty shall find the beginning of the neighbouring passages, which are on the same level sideways and shall pass through the passages which form an angle of 90 degrees upwards with the ones formed by the grooves on the first wall and will fly out from new site, situated upon the wall above the receptacle. These second passages are closed from below by even branches which break the connection between the upper and lower space.

When the bees return again they will land on the known sites upon the lower wall, to which they are used to, and will go in through the known passages. When they come upon the uneven branches of the additionally separating redirecting partition, they will go to the lower separated space. Thus, the upper separated inner space shall be free since the first fly out of the bees.

If the mutual disposition of the entrance regulator and the additionally separating partition is the opposite - the branches that close the lower passages, to which the bees are used to, close them from below and the branches that close the passages leading inside out in an upwards direction- from above, then redirecting shall also be in an opposite manner - the lower separated inner space shall be free from the bees and they will be redirected to the upper one.

Depending on which one of the two additionally separated inner spaces by the inner part of the additionally separating redirecting partition inner spaces shall be selectively connected to the old or to the new passages, formed as a result of the changed position of the entrance regulator, shall be defined the space free from bees. Respectively, it will be the space connected to the new passages and the bees shall be directed to the space connected with the old known passages.

In case the internal part of the additionally separating redirecting partition is with rugosity along its whole length, in a way that this part is in contact not only with the horizontal partially separating partition, but to the vertical partition that separates the transverse redirecting frame space too, this space shall be separated from the two case spaces, placed at the same level, by closing the selective passages around the horizontal partially separating partition by the rugosity.

In case the internal part of the additionally separating redirecting partition is with rugosity along half of its length, in a way that this rugosity is in contact with the vertical partition that separates the frame space from the case spaces, and the point between the rugosity and the even halves touches the point where the horizontal partially separating partition at the same level is in touch with vertical partition, which is between the frames of the two cases on this level, then the transverse redirecting frame space shall be connected, only with this part of case space, which is on the side of the flat half of the additionally separating partition. Respectively, only this part of the case space shall be connected with the outer space through the transverse frame space by the passages formed from the grooves of the entrance regulator.

The cage for artificial swarms that could be placed for collecting the bees that are redirected in a chosen case space could be considered as an additional non-permanent element of the redirecting system. It is put in and removed from the other levels sideward, except the upper level - as is the case with frames. For this lateral movement instead of bearers, it has extended upper part, which corresponds to the function of the bearers. There are two openings - top and bottom from the one side only -from this one that is put to the transverse redirecting frame space. When put in the relevant case space, the two openings are found just opposite to the selective passages under the upper horizontal partially separating partition and above the lower horizontal partially separating partition, which two partitions enclose the relevant case space. That way there is only one possibility for the redirected bees - to fly to its inside. Once in it, the flying bees carrying nectar having nowhere to put it, shall stay there and form an artificial swarm.

The redirecting of the queen bee is done from the case space, where it usually stays on large number of frames and is difficult to be found, to the single frame in transverse redirecting frame space. For this purpose, there is a specially designed opening, large enough for the queen to pass, which opening is in the vertical partition between the two spaces at each level. Until the moment of redirection, the queen bee is isolated in the case space with no possibility to pass from the case space into the transverse redirecting frame space throughout the selective passages around the relevant horizontal partially separating partition where only the worker bees could pass . For the queen bee the only possible way is through the sufficiently large opening in the vertical partition, which opening is closed through the two side walls of the case space by a couple of bands or a couple of selective bands that let in only the worker bees. Each of the bands is put in and removed sideward. This is done after partially removing only the relevant movable parts of the walls, thus giving access to the bands. Thus, the queen bee that already has access, pushed by her instinct to find a new place to lay eggs, passes on the single frame in the transverse redirecting frame space. Thus the direction of her movement is predetermined and she shall be found on this single frame. The presence of the queen bee on this single frame (in the cases when she lays her eggs on the both sides) can be detected without opening the beehive, but only by removing the removable part of the wall, behind of which there is a vertical mesh partition, through which the frame can be examined.

When there are two queen bees in the two parts of some of the case spaces, separated by a partition, only one band of the couple of bands that lie opposite one another, can be removed from the one side. Thus, only this queen bee shall have access to the transverse redirecting frame space.

The frames in the case spaces are grouped in two cases. Each case includes a group of frames and two bearers transverse to the frames in the group. The bearers carry the top bars of the frames, placed at their ends and touched in the upper part to the side bars of the frames. Thus the bearers fix the frames and they move by sliding on the fixed vertical partitions, which stands transverse to the frames in the cases.

Since the fixed vertical partitions are narrower than the bearers, there is a space inside between the fixed vertical partitions and the vertical side bars of the frames, which space provides passage of bees and free lateral movement of the case. The common height of the bearers and the fixed vertical partitions is equal to the height of the frames and the one of the movable separate sides of the beehive, so that each fixed vertical partition and the two bearers on it, which move the relevant cases in two opposite directions outside, form common inner partition, which separates at certain level the transverse frame space from the two adjacent inner case spaces.

The two cases, which are located in the upper case space, are taken out after a sideward sliding of the common top cover, standing over the relevant case and the mash partition. The case is taken out by lifting up after gripping the bearers. The cases that are in the other lower case spaces are taken out sideward - each from its side, after preliminary removal of the single movable side wall.

In the transverse watering space is collocated a system for independent racking of the bees, which can be divided into two watering systems, working in parallel, independently of each other.

It consists of a holder for natural waters flowing down from the cover, racks with spillways, transit conductor for fluids and discharging conductor for the water of the watering system. Through the spillways of the racks each rack is gravitationally interconnected with the rack standing under it. When the main body of the rack in which the bees have access to the liquid is full, through the spillway the liquid can be poured into: the main body of the next rack standing under, in case it is placed in opposite direction in respect of its spillway; in the spillway of the lower one, when the two spillways are from the side of the main bodies of the racks and are one under the other; in separate transit conductor, transit conducting the overflowed liquid along the lower rack, which is in a shifted position in respect to the upper one, so the transit conductor that passes transit along it infuses the overflowed liquid from the spillway into the main body of the third rack that stands under the second rack.

At the end of the system there is a discharging conductor, through it the unutilized liquid is poured out of the hive. The water enters, passes through all the racks and is exuded by gravity, without the intervention of the beekeeper.

In cases, when there is a feeding liquid to pour from the top, this is done after shifting sideward the external lateral sliding cover to obtain access to the system. The poured liquid also reaches by gravity the lowest rack.

When the feeding is with solid food, the one system can be for watering, and the feeding through the racks of the other system that this time are not connected between each other, is done through opening the common movable wall of the transverse watering space and giving the solid food separately in each rack.

In the transverse redirecting frame space is located the system for independent pollen collection too. That is why it is directly connected with the system for redirecting of the bees. It consists of two parts - pollen extracting capsules that can be placed independently of each other at each level and one common pollen collector.

The pollen extracting capsules are capsules with openings for removing the pollen. When changing the position of the entrance regulator, at which change its inner edge that has one wall with grooves is changed by an edge that is common for the two walls with grooves, the pollen extracting capsules are places just behind the passages, to which the bees are accustomed to. As the old passages remain, but new passages which from the inside of the same level are also open, the bees entering the hive with pollen, shall enter through the known passages, from there they will pass throughout the capsules, where the pollen shall be removed, but on their way back to leave the hive, instead of passing through the narrow openings of the capsules, which uselessly injure them and to interfering the incoming bees, the outgoing bees can go around them and to go out through the newly opened passages.

The pollen collector is common for the pollen extracting capsules of all levels. It is a box, collocated at the level of the deep bottom.

The advantages of the proposed beehive according to the invention are:
1. In the beehive are formed independent interior spaces with independent access, in which spaces independently can be raised and subsequently united different bee colonies - they can be independently checked up, fed and through their union in the active season their forces can be united.
2. The flying bees can be redirected independently between the different separated spaces at all levels, so the honey frames from each separate space can be taken out in the absence of bees. The flying bees can be redirected in a cage, placed in a desired separate space to form an artificial swarm. The queen bees can be directed for a purpose at a certain frame, single in a transverse redirecting frame space, where they can be found. The operations are executed through frames grouped in cases.
3. The pollen can be independently obtained at all levels.

### DESCRIPTION OF THE DRAWINGS

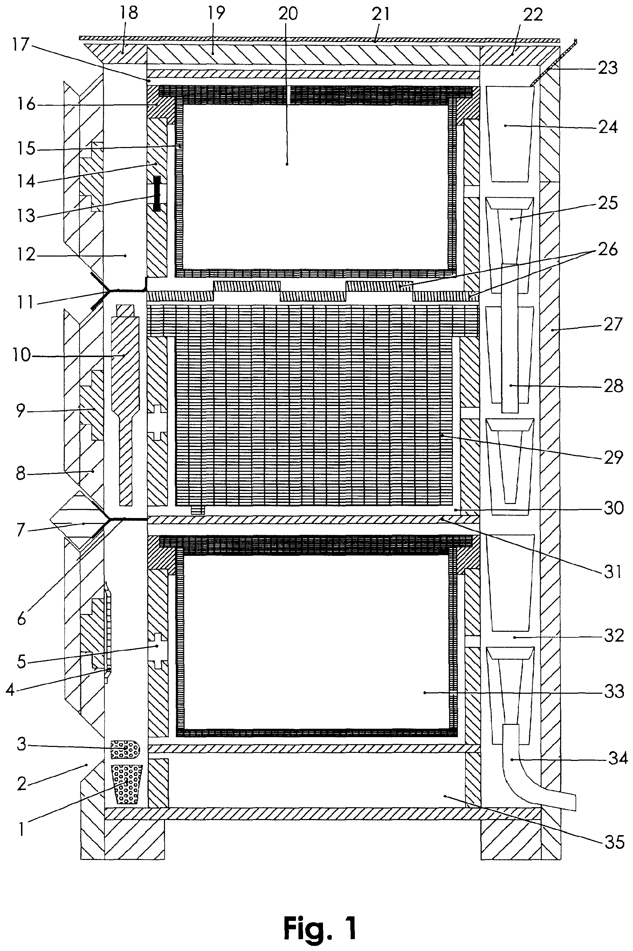

An example for embodiment of the invention is shown in Figure 1 which is a schematic representation of the hive, shown in cross vertical section.

### DESCRIPTION OF PREFERRED EMBODIMENTS

The example of the hive consists of pollen collector 1, receptacle of the entrance regulator 2, pollen extracting capsules 3, vertical mesh partition 4, opening for the passage of the queen bee 5, additionally separating redirecting partition 6, entrance regulator 7, separate removable outer wall 8, movable part of wall 9, single frame (in transverse redirecting frame space) 10, additionally separating redirecting partition with rugosity inside 11, transverse redirecting frame space 12, selective band 13, vertical partition 14, frame in a case space 15, bearer of grouped frames 16, selective passage 17, internal cover over the transverse redirecting frame space 18, internal cover over the upper case space 19, upper case space 20, external laterally sliding cover 21, internal cover over the watering space 22, holder of natural waters 23, main body of the rack 24, spillway of the rack 25, consecutively divergent external branches (of the additionally separating redirecting partition) 26, common movable wall of the transverse watering space 27, transit conductor for fluids 28, cage for artificial swarms 29, middle case space 30, horizontal partially separating partition 31, transverse watering space 32, lower case space 33, discharging conductor for the water 34, deep bottom 35.

### EXAMPLES FOR EMBODIMENT OF THE INVENTION

The beehive presented as an example of embodiment of the invention is with frames arranged in three levels.

In every one of the three case spaces - upper case space 20, middle case space 30 and lower case space 33 - there are two cases, representing group of case frames 15 along with the bearers 16 on which they lay. The number of the frames in the cases depends on the longitude of the transverse redirecting frame space 12, which is for a single frame (in a transverse redirecting frame space) 10, that is at each level in this transverse redirecting space.

At each level in the other transverse watering space 32 there are two racks composed of main body of the rack 24 and spillway of the rack 25. Each of these racks is part of one of two working in parallel independent watering systems.

When wintering, there is one different bee colony at each level which takes the both cases in the relevant case space. The case spaces between the different levels are completely separated by horizontal partially separating partitions 31 and additionally separating redirecting partitions 6 placed laterally to them.

The transverse redirecting frame space 12 is separated at each level by additionally separating redirecting partition 6. These partitions are installed in combination with the relevant entrance regulators 7, so that every entrance regulator 7 is in the lower position of one of the two walls with grooves applied on the inner wall. The other inner wall of the entrance regulator 7, with which the first one forms common internal edge, is without grooves, and the one of the rows of the consecutively divergent external branches of the additionally separating redirecting partition 26 is under the grooves which form passages. In this combination all bees that enter from outside through such a passage are directed by it upside to the above standing part of the transverse redirecting frame space 12 and from there - throughout the internal selective passage 17 which is above the horizontal partially separating partition 31 - to the two united parts of the case space at the same level.

In the inactive season all the three bee colonies are serviced independently of each other. Each bee colony can be checked up separately and without preparation. The upper one by shifting the external laterally sliding cover 21. The other two -sideway throughout the vertical mesh partitions 4 standing behind the movable parts of walls 9. Each colony can be both - independently fed and racked throughout the main bodies of the racks 24 of the two racks that are on its level. In one of them a solid food can be placed using the access throughout the common movable wall of the transverse watering space 27. In the same time, throughout the other watering system of the racks connect through theirs spillways or through a transit conductor for fluids 28 can receive rain or melting snow water caught from above by the holder of natural waters 23.

At this time the openings for the passage of the queen bee are closed for them by selective bands 13 that admit only the worker bees. The selective passages 17 also do not admit the queen bees in the transverse redirecting frame space 12.

After assuring in the checks that the frames in a case space 15 of the upper case space 20 and the lower case space 33 are filled with brood, the openings for the passage of the queen bees 5 at these two levels are opened for the queen bees too by pulling sideway the selective bands 13, and they pass from these two case spaces into the transverse redirecting frame space 12 on the single frames (in the transverse redirecting frame space) 10 at the relevant level, looking for a place to lay their eggs. There, without any searching, the queen bees can be found and taken out.

After taking out the two queens, the two separating additionally redirecting partitions 6 which separate the transverse redirecting frame space 12 in three parts are pulled off. The common colony unites around the queen bee in the middle case space 30.

After filling the frames in the upper case space 20 with honey, the bees from this space are redirected in the middle case space 30, by changing the position of the entrance regulator 7, which is in the receptacle between the levels of the middle case space 30 and the upper case space 20, in a position that the inner edge is the edge of the regulator that is common for the two sides with grooves, the symmetrical grooves of the first wall have changed places, and because of their symmetry the passages that the bees know are at the same place. In the same receptacle, together with the change of the position of the entrance regulator 7, a separating additionally redirecting partition 6 is placed, in a way that the one row of consecutively divergent external branches of the separating additionally redirecting partition 26 closes the old passages of the first wall of the entrance regulator from above to the upper case space 20 but the branches of the other row close the newly formed passages of the grooves of the second wall, which has become inner - from below to the middle case space 30. All the bees coming out from the upper case space 20 pass through the transverse redirecting frame space 12 and from there they fly out throughout the new passages. Coming back from their fly, when entering by the known bottom passages throughout the transverse redirecting frame space 12, divided by the separating additionally redirecting partition 6, they are directed to the middle case space 30. The full honey frames from the emptied upper case space 20 are taken out for removing the honey.

At the same time the bees from the lower case space 33 are directed throughout the transverse redirecting frame space 12 in the middle case space 30 and in the deep bottom 35, by changing the mutual position of the relevant entrance regulators 7 and the separating additionally redirecting partitions 6 that stay between the levels of the relevant case spaces. For the lower receptacle of the entrance regulator 2 the transformation is the same as the above described, and for the upper receptacle - inverse.

The frames freed from bees from the lower case space 33 are taken outside by sliding and are put in the empty upper case space 20 to hatch the brood and fill with honey.

The frames freed from honey, which have been initially in the upper case space 20, after their return are placed immediately in the lower case space 33 which is free from bees and frames.

The one of both additionally separating redirecting partition 6, , that are on the two sides of the horizontal partially separating partition 31 staying between the middle case space 30 and the lower case 33 space is taken out only for a few days, for the queen to pass in the lower case space 33 and after that is put in again. Thus the queen stays closed in the lower case space 33.

When the position of the entrance regulators 7 in the receptacles for entrance regulator 2 has been transformed in view to open second outward passages through placing the common edge with two sides with grooves inside in the transverse frame space 12 at all levels, except the lowest, in the known of the bees passages of the entrance regulators 7 with changed position, are put pollen extracting capsules 3. They take the pollen off the bees which are entering at the two upper levels and pollen is falling down throughout the transverse redirecting frame space 12 into the pollen collector 1 that is positioned at the level of the deep bottom 35. The bees that fly out from the beehive, face the narrow openings of the pollen extracting capsules 3, that are positioned only on the old known passages, shun them and go out through the new passages, that are formed with the change of the position of the entrance regulator 7 - without being damaged on the narrow openings of the pollen extracting capsules 3 and without disturbing the bees entering against them through these openings.

At the same time the honeycombs in these upper spaces are filled only with honey but not with pollen admixture. In the lower case space 33 the pollen is necessary for the brood, which is raised there.

The initial position of the one direction passages of the entrance regulators 7 is restored there, where the future redirection is expected, so that the bees don't lose their reflex to the known openings.

After the hatching of the brood in the middle case space 30 and filling the frames of this space with honey, the bees in this space are redirected to the upper case space 20, so that the separating additionally redirecting partition 6 between the two levels is placed with the one row of consecutively divergent external branches of the separating additionally redirecting partition 26 under the passages that the bees know, and the branches diverging in other direction of the other row - over the new passages formed after the change of the position of the entrance regulator 7, which stands at the level between the middle case space 30 and the upper case space 20. At the same time the bees from the middle case space 30 are also directed in the lower case space 33 by changing the position of the entrance regulator 7 to open second passages too, as the one row of the consecutively divergent external branches of the separating additionally redirecting partition 26 is placed in position over the old known passages, and the consecutively divergent external branches of the separating additionally redirecting partition 26 of the other row - under the newly formed passages.

The frames that are released in this way from the bees in the middle case space 30 are taken out sideward through the bearers of grouped frames 16 and are carried out to extract the honey.

At their place is put a cage for artificial swarms 29.

The combinations of the mutual positions of the entrance regulators 7 and the separating additionally redirecting partitions 6 at the both levels - above and below the middle case space 30 are changed in reverse direction and the bees from the upper case space 20 and the lower case space 33 are redirected in the cage for artificial swarms 29 into the middle case space 30 and they fill it.

If the only one left queen bee has been redirected before this in the transverse redirecting frame space 12 onto a single frame (in the transverse redirecting frame space) 10, it could be taken out and put together with the frame in the cage for artificial bee swarms 29, before filling in the artificial swarm. In the cage for artificial swarms 29 also could be put another isolated queen bee or a mature queen cell.

If the purpose of the artificial swarm is to obtain bee venom, no queen bee is put in. Then the cage for artificial swarms 29 is taken out at a distance that is close enough, so that the released bees can come back in the known beehive and far enough to avoid delivering the irritation of the bees to other families in the apiary.

When redirecting the bees from the upper case space 20 in the middle case space 30, the honey frames freed from bees are taken out in group from the upper case space 20 from the top by holding the bearers of grouped frames 16 and carried out to extract the honey. At their place are put the released from honey frames from the middle case space 30. The last released from honey frames from the upper case space 20 are placed in the middle case space 30 freed from the cage for artificial bee swarms 29.

So the honey from all the grouped case frames is taken. After fulfilling the whole cycle, the start up sectioning of three levels is restored for the new season and new queens are put in.

In view to be gently accepted, the frames with new queen bees or the queen cells are placed in the emptied transverse redirecting frame space 12.

### APPLICATION (USE) OF THE INVENTION

The beehive as per the invention is ready for industrial serial production and use in apiculture.

ENCLOSURE: 1 Figure

## Claims

1. A beehive with frames situated at several levels in common body, **characterized in that** by a combination of horizontal partially separating partitions (31), separating additionally redirecting partitions (6), and vertical partitions (14) together with bearers of grouped frames (16), a common inner space of the beehive is separated at each single level in separate independent inner spaces, each functionally distinct and independently accessible, which are: case space (20) for two cases with grouped frames in case space (15) and two spaces serving it, which are situated transverse to the frames in the case space (15), transverse inner spaces - the one - transverse redirecting frame space (12) which is designed for positioning a single frame (in transverse redirecting frame space) (10) to direct the queen bee in it, for a system for independently directing the flying bees, of which system this same space is a part and for a system for independently collecting of pollen at each level; and the other transverse inner space - transverse watering space (32), designed for collocating a watering system.

2. A beehive with common inner space, divided at each level on separate independent inner spaces, each functionally distinct and independently accessible, as per claim 1, which spaces are **characterized in that** an independent access to each of them is realized with the combination of: separate removable outer walls (8), providing independent side access to the transverse redirecting frame space (12) and to the both sides of each case space (33); common movable wall of the transverse watering space (27), providing side access to the watering space (32); and laterally sliding cover (21), providing independent upper access to all separate independent internal functionally distinct spaces at the uppermost level.

3. A beehive with separate removable outer walls (8), as per claim 2, which walls are **characterized in that** they themselves, as well as vertically neighboring stationary walls of the body of the beehive are beveled at an angle of 45 degrees to the horizontal plane, passing equidistant between them and so forming between two vertically neighboring walls a receptacle for the entrance regulator (2), which entrance regulator (7) is a regular tetragon prism which when is placed in the receptacle for the entrance regulator (2) is found in a position in the space, where the two edges of the entrance regulator (7) - one internal and one external to the inner space of the beehive stand in a common horizontal plane, and each of the walls forming the inner edge, concludes with the horizontal plane passing through the two edges angle of 45 degrees.

4. A beehive with separate removable outer walls (8), as per claim 2, which walls are **characterized in that** they are composite and as such, they have movable part of wall (9), combined with staying behind it vertical mesh partition (4), which combination can be applied also to the fixed walls on the top level of the hive.

5. A beehive with transverse redirecting frame space (12), as per claim 1, which transverse redirecting frame space (12) is **characterized in that** in it is collocated a system for redirection of the bees, which system is a combination that includes this very transverse redirecting frame space (12); the entrance regulator (7), which is a regular tetragon prism with consecutively changes grooves on two equal, mutually perpendicular adjacent walls, which grooves are symmetrically located with respect to its center; separating additionally redirecting partition (6) that in its inner part may be flat, with, or without rugosities, or with rugosity only on the half of its length, with which inner part it separates in addition the partially separated functionally distinct inner spaces, and at the outer part of the hive this separating additionally redirecting partition (6) has an outer part, representing consecutively divergent external branches of the separating additionally redirecting partition (26), which conclude with the horizontal plane angles of 45 degrees, and between themselves an angle of 90 degrees and in their sequence corresponding to the sequence of the grooves of two mutually perpendicular neighboring walls with grooves at the entrance regulator (7), which grooves when applied to the receptacle for the entrance regulator (2) form passages for connecting the external hive space with its inner space in a way that the consecutively divergent external branches of the separating in addition redirecting partition (26) can form, along with the grooves at the entrance regulator (7), combinations of mutual positions, at which to close some of these passages, and other of them to continue to the additionally separated inner spaces of the hive; cage for artificial swarms (29) which can be put at the end of the system - in the chosen case space - for filling in the redirected bees.

6. A beehive with case space (20) for two cases with grouped frames in case space (15) at each level, as per claim 1, which cases are **characterized in that** the frames are grouped in groups, which are taken sideward by couple bearers of grouped frames (16) by sliding along the vertical partitions (14) from each separate level throughout the place of shifted individual movable outer wall (8) or vertically from the upper case space (20).

7. A beehive with transverse watering space (32), designed for collocating a watering system, as per claim 1, which system is **characterized in that** it combines gravitationally interconnected: holder of natural waters (23); racks composed of main body of the rack (24) and spillway of the rack (25); transit conductor for fluids (28) and discharging conductor for the water (34), so that the watering system can be divided into two in parallel working independent of each other watering systems for independent feeding at all levels.

8. A beehive with transverse redirecting frame space (12) for collocating a system for independently collecting of pollen at each level, as per claim 1, which system is **characterized in that** it consists of pollen extracting capsules (3) at each level and common pollen collector (1) under them at the level of the deep bottom (35), all of them situated in the transverse redirecting frame space (12), which pollen extracting capsules combined with the relevant entrance regulators (7) let in the bees one-way - only when entering the hive.

9. A beehive with separating additionally redirecting partitions (6), as per claim 1, **characterized in that** they can be perforated with selective holes to let in only the worker bees and not the queen bee.

10. A beehive with case space (20) and transverse redirecting frame space (12) as per claim 1, the connection between which is **characterized in that** with the combination of selective passages (17) around the horizontal partitions separating partially (31) and the opening for the passage of the queen bee (5) with applied in it selective bands (13) with holes letting in only the worker bees, but not the queen bee, the redirecting of the queen bee from the case space (20) into the transverse redirecting frame space (12) onto a single frame (in transverse frame space) (10) is regulated, as selective bands are taken out laterally and independently for each level.

## Patentansprüche

1. Bienenstock mit Rahmen, die auf mehreren Ebenen im gemeinsamen Gehäuse angeordnet sind, **dadurch gekennzeichnet, dass** durch eine Kombination von horizontalen, teilweise trennenden Trennwänden (31), zusätzlich trennende umleitende Trennwände (6) und vertikale Trennwände (14), zusammen mit Trägern von gruppierten Rahmen (16), ein gemeinsamer Innenraum des Bienenstocks auf jeder einzelnen Ebene in einzelnen, voneinander unabhängigen Innenräumen aufgeteilt ist, die jeweils funktionell eigenständig und unabhängig zugänglich sind: Kassetenraum (20) für jeweils zwei Kasseten mit gruppierten Rahmen im Kassetenraum (15) und zwei querverlaufenden Bedienungsräume, die quer zu den Rahmen im Kassetenraum (15) angeordnet sind - der eine - querverlaufender Umlenkrahmenraum (12), der zur Positionierung eines einzelnen Rahmens (im querverlaufenden Umlenkrahmenraum) (10) vorgesehen ist um die Bienenkönigin darin zu leiten, für ein System zur unabhängigen Leitung der fliegenden Bienen, von welchem System dieser Raum ein Teil auch von einem System zum unabhängigen Sammeln von Pollen auf jeder Ebene ist, und der andere querverlaufende Innenraum Quertränkungsraum (32) ist, der für die Anordnung eines Tränkungssystems ausgelegt ist.

2. Ein Bienenstock mit einem gemeinsamen Innenraum, der auf jeder Ebene in einzelnen, voneinander unabhängigen Innenräumen aufgeteilt ist, jede funktionell eigenständig und unabhängig zugänglich ist, nach Anspruch 1, welche Räume **dadurch gekennzeichnet sind, dass** ein eigenständiger Zugang zu jedem von ihnen mit der folgenden Kombination realisiert wird: Separate abnehmbare Außenwände (8), die einen unabhängigen Seitenzugriff auf den querverlaufenden Umlenkrahmenraum (12) und auf die beiden Seiten jedes einzelnen Kassetenraums (33) ermöglichen; gemeinsame bewegliche Wand des Quertränkungsraums (27), die einen Seitenzugriff auf den Tränkungsraum (32) bereitstellt; und seitlich gleitende Abdeckung (21), die einen unabhängigen oberen Zugang zu allen separaten, unabhängigen internen, funktionell eigenständigen Räumen auf der obersten Ebene bietet.

3. Bienenstock mit separaten abnehmbaren Außenwänden (8) nach Anspruch 2, wobei die Wände **dadurch gekennzeichnet sind, dass** sie selbst, sowie deren senkrecht benachbarte stationäre Wände des Bienenstocks in einem Winkel von 45° zu einer horizontalen Ebene abschrägt sind, die in gleichen Abständen dazwischen verläuft, wobei zwischen zwei senkrecht benachbarten Wänden eine Aufnahme für den Eintrittsregler (2) gebildet wird, welcher Eintrittsregler (7) ein regelmäßiges Tetragonprisma ist, und welcher beim Einsatz in die Aufnahme für den Eintrittsregler (2) sich in einer räumlichen Position befindet, wo die beiden Kanten des Eintrittsreglers (7) - eine innerhalb und eine außerhalb des Innenraums des Bienenstocks - in einer gemeinsamen horizontalen Ebene liegen und jede der Wände, die die inneren Kanten bilden, mit der horizontalen Ebene, die durch die diese beiden Kanten verläuft, einen Winkel von 45° schließt.

4. Bienenstock mit separaten abnehmbaren Außenwänden (8) nach Anspruch 2, wobei die Wände **dadurch gekennzeichnet sind, dass** sie mehrteilig sind und als solche einen beweglichen Teil der Wand (9) aufweisen, der mit einer hinteren vertikalen Netzabtrennung (4) kombiniert ist, welche Kombination auch auf die festen Wände auf der Oberseite des Bienenstocks angewendet werden kann.

5. Bienenstock mit querverlaufendem Umlenkrahmenraum (12) nach Anspruch 1, wobei der querverlaufender Umlenkrahmenraum (12) **dadurch gekennzeichnet ist, dass** in ihm ein System zur Umlenkung der Bienen aufgestellt ist, wobei das System eine Kombination ist, umfassend denselben querverlaufenden Umlenkrahmenraum (12); den Eintrittsregler (7), bei dem es sich um ein regelmäßiges Tetragonprisma mit Nuten an zwei identischen, zueinander senkrechten, benachbarten Wänden handelt, die symmetrisch bezüglich ihrer Mitte angeordnet sind und welcher Eintrittsregler (7) eine Raumposition aufweist, die durch die Wände des Behälters des Eintrittsreglers (2) angegeben ist, wobei die Wände in einem Winkel von 45° abgeschrägt sind - Position, in der zwei Kanten des Eintrittsreglers (7) - eine innenliegende und eine außenliegende bezüglich der Innenkante des Bienenstocks auf einer gemeinsamen horizontalen Ebene liegen, und jede der Wände, die die innere Kante bildet mit der horizontalen Ebene, die durch diese beiden Kanten durchläuft, einen Winkel von 45° schließt; zusätzlich trennende umleitende Trennwand (6), die in ihrem inneren Teil flach sein kann, mit oder ohne Faltstellen oder mit Faltstellen nur auf der Hälfte ihrer Länge, mit welchem inneren Teil sie zusätzlich die teilweise getrennten funktionell eigenständigen Innenräume trennt, und diese zusätzlich trennende umleitende Trennwand (6) auf der äußeren Seite des Bienenstockes einen Aussenteil aufweist, der aufeinanderfolgende divergierende äußere Zweige dieser zusätzlich trennende umleitende Trennwand (26) darstellt, die mit der horizontalen Ebene einen Winkel von 45° und zwischen sich einen Winkel von 90° abschließen und in ihrer Reihenfolge der Reihenfolge der Nuten zweier zueinander senkrechter Nachbarwände mit Nuten am Eintrittsregler (7) entsprechen, wobei die Nuten bei ihrem Anlegen zum Behälter des Eintrittsreglers (2) Durchgänge bilden, zum Verbinden des äußeren Bienenstockraumes mit seinem inneren Raum in einer Art und Weise, dass die aufeinanderfolgenden divergierenden äußeren Zweige der zusätzlichen umleitenden Trennwand (26), zusammen mit den Nuten des Eintrittsreglers (7) Kombinationen von gegenseitigen Stellungen bilden können, bei denen einige dieser Durchgängen geschloßen werden können, und andere bis zu den zusätzlich getrennten inneren Räume des Bienenstocks fortgesetzt werden können; ein Käfig für künstliche Bienenschwärme (29), der am Ende des Systems - im gewählten Kassetenraum - zum Ausfüllen mit der umgeleiteten Bienen eingesetzt werden kann.

6. Ein Bienenstock mit Kassetenraum (20) für zwei Kasseten mit gruppierten Rahmen im Kassetenraum (15) auf jeder Ebene nach Anspruch 1, wobei die Kasseten **dadurch gekennzeichnet sind, daß** die Rahmen in Gruppen gruppiert sind, die seitlich durch ein Paar Träger von gruppierten Rahmen (16) durch Gleiten entlang der vertikalen Trennwände (14) von jedem separaten Niveau über die Stelle der verschobenen einzelnen beweglichen Außenwand (8) oder vertikal durch den oberen Kassetenraum (20) herausgenommen werden.

7. Bienenstock mit querverlaufenden Tränkungsraum (32), der zur Anordnung eines Tränkungssystems ausgelegt ist, nach Anspruch 1, wobei das System **dadurch gekennzeichnet ist, dass** es folgende gravitativ miteinander verbundenen Bestandteile kombiniert: Fangtrichter für natürliche Gewässer (23); Tränken umfassend Hauptkörper der Tränke (24) und Überlauf der Tränke (25); Transitleitung für Fluide (28) und Entladungsleitung für das Wasser (34), so dass das Tränkungssystem in zwei parallel arbeitende, voneinander unabhängige Tränkungssysteme für die unabhängige Zuführung auf allen Ebenen aufgeteilt werden kann.

8. Bienenstock mit querverlaufenden Umlenkrahmenraum (12) zur Anordnung eines Systems zum unabhängigen Sammeln von Pollen auf jeder Ebene nach Anspruch 1, wobei das System **dadurch gekennzeichnet ist, dass** es aus Pollenfangkapseln (3) auf jeder Ebene und einem gemeinsamen Pollenkollektor (1) darunter auf der Höhe des tiefen Bodens (35) besteht, wobei alle diese im querverlaufenden Umlenkrahmenraum (12) liegen, wobei die Pollenfangkapseln in Kombination mit den entsprechenden Eintrittsreglern (7) die Bienen einseitig einlassen - nur beim Betreten des Bienenstocks.

9. Bienenstock mit zusätzlich trennenden umleitenden Trennwände (6) nach Anspruch 1, **dadurch gekennzeichnet, daß** sie mit selektiven Bohrungen perforiert werden können, um nur die Arbeiterbienen und nicht die Bienenkönigin einlassen.

10. Bienenstock mit Kassetenraum (20) und mit querverlaufenden Umlenkrahmenraum (12) nach Anspruch 1, wobei die Verbindung zwischen beide letzte **dadurch gekennzeichnet ist, dass** durch die Kombination von selektiven Durchgängen (17) um die horizontalen teilweise trennenden Trennwänden (31) und die Öffnung für die Umleitung der Bienenkönigin (5) mit darin eingesetzte selektive Bänder (13) mit Löchern, die nur die Arbeiterbienen, aber nicht die Bienenkönigin einlassen, eine geregelte Umleitung der Bienenkönigin aus dem Kassetenraum (20) in den querverlaufenden Umlenkrahmenraum (12) auf einen einzigen Rahmen (im querverlaufenden Umlenkrahmenraum) (10) erfolgt, wobei die selektive Bänder seitlich und unabhängig für jede Ebene herausgenommen werden.

## Revendications

1. Une ruche avec des cadres situés à plusieurs étages à l'intérieur d'un corps commun, **caractérisée en ce que** par une combinaison de cloisons horizontales (31) de séparation partielle en complément de cloisons de renvoi (6), et de cloisons verticales (14) conjointement avec des supports de cadres (16) groupés, un espace intérieur commun de la ruche est séparé à chacun des étages individuels en espaces intérieurs indépendants chacun fonctionnellement distincts et indépendamment accessibles, qui sont : un évidement d'un boîtier (20) pour deux boîtiers avec des cadres groupés dans l'évidement du boîtier (15) et deux espaces le desservant qui sont disposés transversalement aux cadres situés dans l'évidement du boîtier (15) transversalement à leurs espaces internes-le premier - un espace transverse (12) d'un cadre de renvoi qui est configuré pour positionner un cadre individuel (10) (dans l'espace transverse du cadre de renvoi) dirigeant la reine des abeilles à l'intérieur, vers un dispositif pour diriger indépendamment les abeilles volantes, duquel dispositif ce même espace est une partie, et vers un dispositif de collecte indépendante du pollen à chacun des étages, et l'autre espace intérieur transverse est un espace d'arrosage (32) transverse configuré pour loger un dispositif d'arrosage.

2. Une ruche avec un espace commun transverse, divisé à chaque étage en espaces intérieurs indépendants séparés, chacun fonctionnellement distincts et indépendamment accessibles selon la revendication 1, lesquels espaces sont **caractérisés en ce qu'**un accès indépendant à chacun d'eux est réalisé par une combinaison : de parois extérieures (8) mobiles de séparation, procurant un accès latéral indépendant à l'espace transverse (12) du cadre de renvoi et aux deux côtés de chacun des évidements de boîtier (33); d'une paroi mobile commune de l'espace d'arrosage transverse (27) procurant un accès latéral à l'espace d'arrosage (32), et d'un couvercle (21) latéralement coulissant, procurant à l'étage le plus haut un accès supérieur indépendant à tous les espaces intérieurs indépendants séparés qui sont fonctionnellement distincts.

3. Une ruche avec des parois extérieures mobiles séparées (8) selon la revendication 2, lesquelles parois sont **caractérisées en ce que** par elles-mêmes, de même que des parois fixes et verticales proches du corps de la ruche, sont biseautées suivant un angle de 45 degrés par rapport au plan horizontal, passant à équidistance entre eux et ainsi formant entre deux parois verticales proches un réceptacle (2) pour un régulateur d'entrée (7), lequel régulateur d'entrée (7) est un prisme régulier tétragonal qui lorsqu'il est placé dans le réceptacle (2) pour le régulateur d'entrée (7), se trouve dans une position dans l'espace où les deux bords du régulateur d'entrée (7), l'un intérieur et l'autre extérieur à l'espace intérieur de la ruche sont dans un plan horizontal commun, et chacune des parois formant le bord intérieur se termine par le plan horizontal passant à travers les deux bords d'angle à 45 degrés.

4. Une ruche avec des parois extérieures mobiles séparées (8) selon la revendication 2, lesquelles parois sont **caractérisées en ce qu'**elles sont en plusieurs parties et en cela ont une partie mobile de cloison (9), combinée avec à l'arrière une partie maillée verticale (4), laquelle combinaison peut aussi être appliquée aux parois fixes à l'étage supérieur de la ruche.

5. Une ruche avec un espace transverse (12) d'un cadre de renvoi selon la revendication 1, dans laquelle l'espace transverse (12) du cadre de renvoi est **caractérisé en ce qu'**il loge un dispositif de redirection des abeilles, lequel dispositif est une combinaison qui comprend l'espace transverse (12) du cadre de renvoi, le régulateur d'entrée (7) qui est un prisme régulier tétragonal avec des rainures dans deux cloisons identiques et adjacentes réciproquement perpendiculaires, lesquelles rainures sont disposées symétriquement par rapport à son centre et lequel régulateur d'entrée (7) a une position dans l'espace qui est définie par les cloisons du réceptacle du régulateur d'entrée, lesquelles cloisons sont biseautées à un angle de 45 degrés, - position selon laquelle deux côtés du régulateur d'entrée (7), un côté interne et un côté externe au côté intérieur de la ruche sont à un niveau horizontal commun, et chacune des cloisons formant le côté interne se termine avec un plan horizontal passant entre ces deux bords à 45 degrés, séparant en complément de la paroi de renvoi (6) dont sa partie interne peut être plate, avec ou sans rugosités ou avec des rugosités seulement sur la moitié de sa longueur, avec laquelle partie interne il sépare en complément des espaces intérieurs partiellement séparés de fonctions distinctes, et, à la partie extérieure de la ruche, cette séparation en complément de la partie de renvoi (6) a une partie extérieure, correspondant à des branches externes successivement divergentes de la séparation en complément de la partie de renvoi (26), qui se termine par les angles de 45 degrés dans le plan horizontal, et entre lesquelles un angle de 90 degrés et selon une séquence correspondante à la séquence des rainures de deux parois proches mutuellement perpendiculaires avec des rainures au niveau du régulateur d'entrée (7), lesquelles rainures lorsque lorsqu'elles sont appliquées contre le logement du régulateur d'entrée (2) forment des passages pour relier l'espace extérieur de la ruche avec son espace intérieur de sorte que les branches externes successivement divergentes de la séparation en complément de la partie de renvoi (26) peut former, le long avec les rainures de l'entrée du régulateur (7), des combinaisons des positions mutuelles pour fermer certains de ces passages et pour d'autres d'entre eux pour continuer la séparation en complément des espaces internes de la ruche, une cage pour des essaims artificiels qui peuvent être placés à la fin du dispositif, en des évidements de boîtier choisis, pour loger les abeilles renvoyées.

6. Une ruche avec un évidement de boîtier (20) pour deux boîtiers avec des cadres groupés dans l'évidement du boîtier (15) à chacun des étages selon la revendication 1, lesquels boîtiers étant **caractérisés en ce que** les cadres sont regroupés par groupes, qui sont pris latéralement par un couple de supports d'un groupe de cadres (16) par coulissement le long de parties verticales (14) depuis chaque étage séparé à travers l'emplacement d'une paroi extérieure mobile (8) individuelle ou verticalement depuis le plus haut évidement de boîtier (20).

7. Une ruche avec des espaces transverses d'arrosage (32) configurés pour loger un dispositif d'arrosage selon la revendication 1, lequel dispositif d'arrosage est **caractérisé en ce qu'**il combine interconnectés suivant la gravité : un support d'eaux naturelles (23), des étagères composées d'un corps principal de l'étagère (24) et d'un déversoir de l'étagère (25), un conduit d'acheminement de fluides (28) et un conduit de délivrance de l'eau (34), de sorte que le dispositif d'arrosage peut être divisé en deux postes parallèles d'arrosage indépendants l'un de l'autre pour une alimentation indépendante à chacun des étages.

8. Une ruche avec un cadre de renvoi transverse pour loger un système de collecte de pollen indépendant à chacun des étages selon la revendication 1, lequel système est **caractérisé en ce qu'**il est constitué de capsules d'extraction de pollen (3) à chacun des étages et un collecteur commun de pollen (1) placé sous celles-ci à l'étage de fond (35), chacune d'elles étant disposées à l'intérieur de l'espace transverse (12) du cadre de renvoi, lesquelles capsules d'extraction de pollen (3) combinées avec le régulateur d'entrée (7) associé laisse un sens unique pour les abeilles seulement lorsqu'elles entrent dans la ruche.

9. Une ruche avec une séparation en complément de parties de renvoi (6) selon la revendication 1, **caractérisée en ce qu'**elles peuvent être perforées de trous sélectifs pour laisser entrer seulement les abeilles ouvrières et non la reine des abeilles.

10. Une ruche avec un évidement de boîtier (20) et un espace transverse (12) d'un cadre de renvoi selon la revendication 1, dont la liaison entre eux est **caractérisée en ce qu'**avec la combinaison de passages sélectifs (17) autour des parties horizontales de séparation partielle (31) et de l'ouverture pour le passage de la reine des abeilles (5), avec l'application sélective de bandes comportant des trous laissant entrer seulement les abeilles ouvrières mais non la reine des abeilles, le renvoi de la reine des abeilles depuis l'évidement du boîtier (20) vers l'espace transverse (12) du cadre de renvoi sur un cadre individuel (10) (dans l'espace transverse du cadre) est régulé selon des bandes sélectives qui sont retirées latéralement et indépendamment pour chacun des étages.
